(19) Europäisches Patentamt
European Patent Office
Office européen des brevets

(11) EP 1 664 359 B1

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **04762663.5**

(22) Anmeldetag: **14.08.2004**

(51) Int Cl.:
***C22B 60/02*** (2006.01) ***C22B 3/00*** (2006.01)
***C22B 59/00*** (2006.01) ***C07F 9/16*** (2006.01)
***G21F 9/12*** (2006.01)

(86) Internationale Anmeldenummer:
**PCT/DE2004/001818**

(87) Internationale Veröffentlichungsnummer:
**WO 2005/021810 (10.03.2005 Gazette 2005/10)**

(54) **VERFAHREN ZUR TRENNUNG VON DREIWERTIGEM AMERICIUM VON DREIWERTIGEM CURIUM**

METHOD FOR SEPARATING TRIVALENT AMERICIUM FROM TRIVALENT CURIUM

PROCEDE DE SEPARATION D'AMERICIUM TRIVALENT DE CURIUM TRIVALENT

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.08.2003 DE 10339328**

(43) Veröffentlichungstag der Anmeldung:
**07.06.2006 Patentblatt 2006/23**

(73) Patentinhaber: **Forschungszentrum Jülich GmbH 52425 Jülich (DE)**

(72) Erfinder:
- **MODOLO, Giuseppe 52428 Jülich (DE)**
- **ODOJ, Reinhard 52393 Gey (DE)**

(56) Entgegenhaltungen:
**WO-A-99/14386** **US-A- 4 318 893**

- **MODOLO G ET AL: "Recent developments in the alina process for An(III)/Ln(III) group separation during the partitioning of minor actinides" PROC INT CONF RADIOACT WASTE MANAGE ENVIR REMED ICEM; PROCEEDINGS OF THE INTERNATIONAL CONFERENCE ON RADIOACTIVE WASTE MANAGEMENT AND ENVIRONMENTAL REMEDIATION, ICEM 2001, Bd. 1, 2001, Seiten 427-431, XP009041619**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 664 359 B1

## Beschreibung

Die Erfindung betrifft ein Verfahren zur Trennung von dreiwertigem Americium von dreiwertigem Curium nach dem Oberbegriff des Anspruchs 1.

Die Trennung von dreiwertigen Actiniden, wie Americium (Am) oder Curium (Cm), von den dreiwertigen Lanthaniden ist ein seit langem bestehendes Problem. Verantwortlich für die Schwierigkeiten beim Trennen dieser Elemente ist das sehr ähnliche chemische und physikalische Verhalten der dreiwertigen Ionen der Lanthaniden und Actiniden. Insbesondere die sehr ähnlichen Ionenradien tragen zum ähnlichen Verhalten dieser beiden Elementegruppen bei. So wurden schon zahlreiche Versuche unternommen, die dreiwertigen Ionen der Actiniden und Lanthaniden mit möglichst hoher Selektivität und hoher Effizienz zu trennen.

Es ist zwar bekannt, dass Extraktionsmittel mit weichen Donorgruppen, welche Stickstoff oder Schwefel als komplexbildende Strukturkomponenten enthalten, bei der Flüssig-Flüssig-Extraktion eine gewisse Selektivität gegenüber dreiwertigen Actiniden besitzen, jedoch konnten die Trennungen bisher nur bei relativ hohen pH-Werten, bei denen die dreiwertigen Actiniden zur Niederschlagsbildung neigen, vorgenommen werden.

Nach dem aus der Veröffentlichung K. L. Nash, Solvent Extr. Ion Exch. 11 (4), 729-768 (1993) bekannten Talspeak Prozess ist eine selektive Extraktion von Lanthaniden mit Hilfe von Komplexierungsmitteln, welche die dreiwertigen Actiniden in Lösung halten, möglich. Jedoch erfolgt dieses Trennverfahren wiederum bei relativ hohen pH-Werten von 3-4 und erfordert den Zusatz von weiteren Salzen.

Ein von der Anmelderin zur Verfügung gestelltes Verfahren zur Extraktion von dreiwertigen Actiniden aus wässrigen Lösungen, welche dreiwertige Actiniden und dreiwertige Lanthaniden enthält, ermöglicht eine Trennung bei hohen Säurekonzentrationen von 0,01 bis 2 mol/l $HNO_3$ (EP 1 019 552 B1). Nach diesem Verfahren wird eine solche saure wässrige Lösung welche ein Gemisch aus dreiwertigen Lanthaniden und Actiniden enthält mittels einem organischen Lösungsmittel extrahiert, welches als Extraktionsmittel eine bis(aryl)dithiophosphin Säure unter Zusatz eines Synergisten enthält. Mit diesem Verfahren wird aufgrund des niedrigen pH-Wertes, beziehungsweise der hohen Säurekonzentration eine Niederschlagsbildung der dreiwertigen Actiniden verhindert und es werden bereits gute Trennergebnisse erzielt. Die zur Bewertung des Trennverhaltens herangezogenen Kennwerte sind hierbei der Verteilungskoeffizient D sowie der Trennfaktor SF (engl. Separation Factor).

$$D_{An(III)} = [An(III)_{org}]/[An(III)_w] \qquad (1)$$

In Formel 1 sind:

$D_{An(III)}$ = Verteilungskoeffizient für ein dreiwertiges Actinid (dimensionslos)

$[An(III)_{org}]$ = Konzentration des dreiwertigen Actinids in der organischen Phase (mol/l).

$[An(III)_w]$ = Konzentration des dreiwertigen Actinids in der wässrigen Phase (mol/l).

$$D_{Ln(III)} = [Ln(III)_{org}]/[Ln(III)_w] \qquad (2)$$

In Formel 2 sind:

$D_{Ln(III)}$ = Verteilungskoeffizient für ein dreiwertiges Lanthanid (dimensionslos)

$[Ln(III)_{org}]$ = Konzentration des dreiwertigen Lanthanids in der organischen Phase (mol/l).

$[Ln(III)_w]$ = Konzentration des dreiwertigen Lanthanids in der wässrigen Phase (mol/l).

$$SF = D_{An(III)}/D_{Ln(III)} \qquad (3)$$

SF = Trennfaktor (dimensionslos)

Mit einem Trennfaktor von SF = 1 ist keine Trennung möglich.

Die nach dem Verfahren unter Verwendung von bis(aryl)dithiophosphinsäure im stark sauren Medium erzielten Trennfaktoren SF zwischen dreiwertigen Actiniden und dreiwertigen Lanthaniden liegen in Abhängigkeit vom Synergisten zwischen 20 bis 2000.

Modolo G et al (Recent developments in the alina process for An(III)/Ln(III) group separation during the partitioning of minor actinides, in: Proceedings of the 8th international conference on radioactive waste management and environmental remidiation: held in Bruges, Belgium, (2001), S. 427-431) offenbart den Alina-Prozess, durch den die dreiwertigen Actinide Am und Cm von Lanthaniden abgetrennt werden können. Insbesondere weist dieses Dokument auf Seite 429 darauf hin, dass die Extraktionsrate von Am(III) aus einer mindestens diese Kationen enthaltenden wässrigen Lösung signifikant besser als die von Cm(III) ist, also eine Trennung stattfindet.

Es existieren verschiedene Verfahren zur Abtrennung der dreiwertigen Actiniden An(III) Am und Cm aus dem flüssigen hochaktiven Abfall, dem Raffinat des PUREX-Prozesses (Madic, C. in $6^{th}$ Information Exchange Meeting on Actinide and Fission Product Partitioning and Transmutation, Madrid, Spain, 11-13 December 2000, EUR 19783, 2001, S. 53- 64). Im ersten Schritt werden die An(III) gemeinsam mit den Lanthaniden Ln(III) koextrahiert und vom Großteil der Spaltprodukte (z. B. Mo, Zr, Cs, Fe, usw.) abgetrennt. Zu den bekanntesten Verfahren gehören der TRUEX, TRPO und der DIAMEX-Prozess. Bei all diesen Verfahren fallen An(III)/Ln(III) Fraktionen an, deren weitere Trennung bisher große Probleme bereitete. Bisher gab es kein Extraktionsmittel, das selektiv An(III) von Ln(III) aus stark aziden Lösungen abtrennt. Betrachtet man aber den P&T Brennstoffkreislauf, in dem langlebige Actiniden zuerst abgetrennt(Partitioning, P) und anschließend durch Transmutation T vernichtet werden, so ist aus folgenden Gründen eine An(III)/Ln(III)-Trennung unerlässlich:

- Etwa ein Drittel der Spaltprodukte sind Lanthaniden.
- Die Ln(III) besitzen die gleiche Oxidationsstufe III und das chemische Verhalten ist dem der An(III) sehr ähnlich.
- Einige Lanthaniden haben sehr große Neutroneneinfangquerschnitte und wirken daher als Neutronengifte bei der Transmutation.

Im DIAMEX-Prozess werden mit Hilfe von Malonsäurediamiden An(III) und Ln(III) gemeinsam aus dem 3 - 4 mol/L $HNO_3$ enthaltenen Purex-Raffinat extrahiert. Nach dem Rück-Extrahieren mit verdünnter $HNO_3$ erhält man ein Produkt, das vornehmlich aus An(III) und Ln(III) besteht sowie eine $HNO_3$-Konzentration von ca. 0,5 mol/L aufweist (Madic, C.; Hudson, M.J.; Liljenzin, J.O.; Glatz, J.P.; Nannicini, R.; Facchini, A.; Kolarik, Z.; Odoj, R. New partitioning techniques for minor actinides, European report, EUR 19149, 2000).

Von der Anmelderin wurde ein Verfahren zur Actiniden-Lanthaniden-Trennung aus salpetersaurer Lösung (0,5-1,0 mol/L $HNO_3$) entwickelt. Der Prozess ist unter dem Namen ALINA-Prozess (Actinide(III)-Lanthanide(III) INTer-group separation in Acidic medium) bekannt (Modolo, G.; Odoj, R.; Baron, P. The ALINA Process for An(III)/Ln(III) Group Separation from strong Acidic Medium, Proceedings of Global 99, International Conference on Future Nuclear Systems, Jackson Hole, Wyoming, USA, August 29 - September 3, 1999; American Nuclear Society, Inc.). Als Extraktionsmittel wurde ein Gemisch aus aromatischer Dithiophosphinsäure und Trioktylphosphinoxid (TOPO) in tert. Butylbenzol verwendet. Einzelheiten zur Synthese der neuen Extraktionsmittel, deren radiolytischen Stabilität sowie deren Eignung zur An(III)/Ln(III) Trennung sind in (Modolo, G.; Odoj, R. Synergistic selective extraction of actinides (III) over lanthanides from nitric acid using new aromatic diorganyldithiophosphinic acids and neutral organophosphorus compounds. Solvent Extr. Ion Exch. **1999**, 17 (1), S. 33-53) offenbart.

Die Trennung von Americium und Curium ist allerdings noch schwieriger als die Actiniden(III)-/Lanthaniden (III)-Trennung und stellt daher eine noch größere Herausforderung an die Prozesschemie dar. Dies hat folgende Gründe:

Im dreiwertigen Zustand haben Americium und Curium sehr ähnliche chemische Eigenschaften aufgrund der nahezu identischen Ionenradien (0,99 bzw. 0,986 Angström). Americium verhält sich in seinen höheren Oxidationsstufen (IV, V, VI,) als sehr starkes Oxidationsmittel und daher eignen sich die bekannten hydrometallurgischen (Flüssig-Flüssig Extraktion) Prozesse (z. B. PUREX-Prozess) zur Abtrennung von heterovalenten Actiniden nicht aufgrund der Instabilität aller Oxidationsstufen bis auf die dreiwertige.

Es ist daher die Aufgabe der Erfindung, ein Verfahren zur Trennung von Americium und Curium zur Verfügung zu stellen, welches einen besonders hohen Trennfaktor SF besitzt. Das neue Verfahren soll sich gut in bereits bekannte Verfahren zur Lanthaniden-Actiniden-Trennung integrieren, bzw. anschließen lassen.

Ausgehend vom Oberbegriff des Anspruchs 1 wird die Aufgabe erfindungsgemäß gelöst, mit den im kennzeichnenden Teil des Anspruchs 1 angegebenen Merkmalen.

Mit dem erfindungsgemäßen Verfahren ist es nunmehr möglich, Americium(III) und Curium(III) mit einem Trennfaktor in der Größenordnung von 10 zu trennen. Es ermöglicht neben der Americium(III)-/Curium(III)-Trennung auch

eine Actiniden(III)-/(Lanthaniden)(III)-Trennung.

Vorteilhafte Weiterbildungen der Erfindung sind in den Unteransprüchen angegeben.

Die Figuren zeigen beispielhaft schematische Prozessabläufe.

Es zeigt:

Fig.1: Ein Schema, bei dem das erfindungsgemäße Trennverfahren für Americium(III) und Curium(III) an einen PUREX-Prozess angeschlossen ist.

Fig.2: Ein Schema für eine Prozessführung, bei der aus einer Lanthanidenlösung zunächst beide Kationen Americium (III) und Curium(III) gemeinsam abgetrennt werden und danach das Americium(III) vom Curium(III).

Gemäß dem erfindungsgemäßen Verfahren können die in einer wässrigen Phase befindlichen Ionen von Americium(III) und Curium(III) getrennt werden. Die Lösung kann dabei auch andere Lanthaniden und/oder Actiniden sowie andere Komponenten enthalten.

Hierzu wird die Americium(III) und Curium(III) enthaltende wässrige Lösung mit einer organischen Phase in Kontakt gebracht, welche ein Extraktionsmittel und einen Synergisten enthält.

Als organisches Lösungsmittel kommen verschiedene Systeme in Betracht. So können reine Lösungsmittel, sowie Lösungsmittelgemische enthaltend mindestens zwei Lösungsmittelkomponenten eingesetzt werden.

Es können aromatische Lösungsmittel, insbesondere bei Raumtemperatur flüssige Lösungsmittel, wie Benzol, Toluol, Tert. Butylbenzol, Xylol, bis- oder tris-(Ter.-Butyl)-benzol, Isopropylbenzol, bis- oder tris(Isopropyl)-benzol alleine oder im Gemisch von mindestens zwei Komponenten eingesetzt werden.

Es können auch weiterhin verzweigte und/oder unverzweigte aliphatische Lösungsmittel, einer Kettenlänge von beispielsweise C5 bis C14, allgemeiner, bei Raumtemperatur flüssige aliphatische Lösungsmittel alleine oder im Gemisch umfassend mindestens zwei Komponenten eingesetzt werden. Insbesondere kommen n-Hexan, c.-Hexan, Heptan, Octan, Nonan, Decan, Undecan, Dodecan, Kerosin oder TPH in Betracht.

Vorzugsweise wird als Lösungsmittel ein Gemisch aus aromatischen und aliphatischen Lösungsmitteln eingesetzt, besonders bevorzugt mit einem aromatischen Lösungsmittel als Hauptkomponente, d. h. > 50%.

Als Lösungsmittel können beispielhaft Toluol, Hexan, ein Gemisch aus Toluol und Hexan, ein Gemisch aus Isooctan und Tert. Butylbenzol genannt werden.

Das organische Lösungsmittel ist vorteilhaft eine aromatische Komponente, wie Benzol, Toluol, Xylol, tert. Butylbenzol enthaltendes Lösungsmittel oder ein rein aromatisches Lösungsmittel.

In einer Ausgestaltung der Erfindung wird als Lösungsmittel mindestens eine Komponente aus der Gruppe von Toluol, Xylol, tert.-Butylbenzol, sowie bis- oder tris-(tert.-Butyl)-benzol, Isopropylbenzol, bis- oder tris-(Isopropyl)-benzol eingesetzt. Der Einsatz dieser Lösungsmittel führt zu einem zusätzlichen positiven Effekt: Die Verteilungskoeffizienten der Actiniden Am (III) und Cm (III) werden zusätzlich verbessert. Der Abtrennfaktor bleibt konstant bei etwa 10.

Die Reihenfolge der Wirksamkeit für den Verteilungskoeffizienten verhalten sich wie folgt:

Benzol < Toluol < Xylol < tert.-Butylbenzol < n-Hexan /Toluol (50/50 Tab. 4) Bis-(isopropyl)-benzol, Tri-isopropylbenzol, Bis-(tert.-Butyl)-benzol, Tris-(tert.-Butyl)-benzol.

Das in der organischen Phase befindliche Extraktionsmittel ist vorzugsweise eine aromatische Dithiophosphinsäure, vorzugsweise bis(chlorphenyl)dithiophosphinsäure.

Die Extraktion erfolgt allgemein mittels eines organischen Lösungsmittels, welches als Extraktionsmittel bis (aryl)dithiophosphinsäure der allgemeinen Formel (4) $R_2PS(SH)$ enthält.

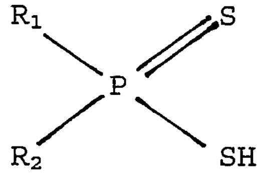

(4)

mit $R_1$ = phenyl- oder naphthyl,
$R_2$ = phenyl- oder naphthyl,
sowie mit methyl-, ethyl-, propyl-, isopropyl-, cyano-, nitro-, halogenyl- ($Cl^-$, $F^-$, $Br^-$, $J^-$) substituierten Resten von $R_1$ und $R_2$ wobei $R_1$ und $R_2$ mit mindestens einer Komponente aus der Gruppe von methyl-, ethyl-, propyl-, isopropyl-, cyano-, nitro-, halogenyl- ($Cl^-$, $F^-$, $Br^-$,$J^-$) substituiert sein können. Diese Gruppen sind beispielhaft für die Acidität des Extraktionsmittels bis(aryl)dithiophosphin Säure steigernde Substituenten, die zu besonders gutem Extraktionsverhalten führen. Entscheidend ist die Steigerung der Acidität des Extraktionsmittels, auf die genaue Stellung der Substituenten kommt es weniger an.

Der in der organischen Phase befindliche Synergist ist vorzugsweise ein Trialkylphosphat (Formel (5)) mit X, Y,Z = RO, vorzugsweise Tris(ethylhexyl)phosphat (TEHP).

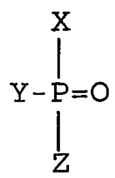

(5)

Mit X und/oder Y und/oder Z = RO(Alkoxy), wobei R verzweigt und unverzweigt sein kann und vorzugsweise von C4-C10 reicht. Hierbei können alle Reste X, Y, Z, R oder RO sein. Es können jedoch aus jeweils ein oder zwei Reste von X, Y, Z RO oder R sein.

Besonders bevorzugt enthält die organische Phase mindestens einen Synergisten aus der Gruppe bestehend aus Trioctylphosphat (Formel (6)), Tris-(2-ethylhexyl)-phosphat (Formel (7)) und Tris-(2-propylpentyl)-phosphat (Formel (8)).

$$(CH_3CH_2CH_2CH_2CH_2CH_2CH_2CH_2 - O -)_3P = O \qquad (6)$$

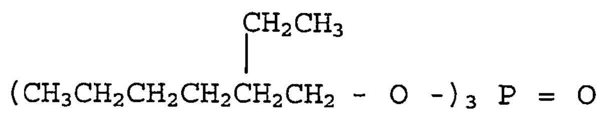

(7)

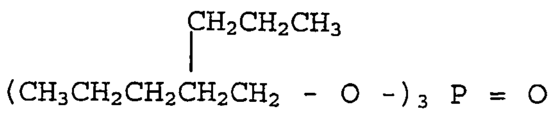

(8)

Mit der Zugabe des erfindungsgemäßen Synergisten wird eine erhebliche Zunahme des Trennfaktors SF bewirkt.

Die Selektivität bei der Abtrennung des Americium III von Curium III wird erheblich gesteigert.

Die Trennung von Am(III) von Cm(III) wird bei einer Säurekonzentration durchgeführt, die abhängig ist vom sowohl von der stofflichen Beschaffenheit und Konzentration des Extraktionsmittels, des Synergisten und des Lösungsmittels. Die Bedingungen müssen so eingestellt werden, dass der Verteilungskoeffizient des Am(III) größer als 1 ist und der des Cm(III) folglich kleiner als 1 ist. Beispielhaft sind in Tabelle 4 mögliche Säurekonzentrationen für zwei verschiedene Lösungsmittel für 0.5 mol/L $(ClPh)_2PSSH$ + 0.15 mol/L TEHP aufgeführt. Die $H^+$ -Konzentrationen können bei der erfindungsgemäßen Abtrennung zwischen 0,01-0,3 Mol/L liegen. Bevorzugt ist ein Bereich zwischen 0,05 und 0,3 Mol/L. Als Säuren können beispielsweise HCl, $H_2SO_4$ und insbesondere $HNO_3$ eingesetzt werden, da $HNO_3$ leicht lösliche Salze bildet.

Mit dieser erfindungsgemäßen Verfahrensweise kann Am(III) von Cm(III) sowohl aus einer Lösung enthaltend alleine diese Komponenten als auch einer Lösung, die zusätzliche Ionen bzw. Kationen, wie beispielsweise Alkalielemente, Erdalkalimente enthält sowie Lanthaniden (III) und Actiniden (IV,V,VI), getrennt werden.

Bei den Extraktionsversuchen mit Dithiophosphinsäuren zur Actiniden(III)/Ln(III) Trennung nach dem Stand der Technik wurde bisher davon ausgegangen, dass Americium(III) und Curium(III) sich ähnlich Verhalten und die gleichen Extraktionseigenschaften besitzen, d. h. ähnliche Verteilungskoeffizient besitzen und somit $SF_{Am/Cm} \sim 1$. Daher wurde Curium(III) bisher nicht berücksichtigt. Die Ergebnisse der Extraktionsversuche mit Curium(III) zeigen erstaunlicherweise ein unterschiedliches Verhalten beider Actinidenelemente. Erfindungsgemäß wurden Extraktionsexperimente mit synthetischen Actiniden(III)/Lanthaniden(III) Lösungen durchgeführt deren Zusammensetzung in Tabelle 1 dargestellt ist. Diese Actiniden(III)/Lanthaniden(III) Lösungen fallen bei einem DIAMEX Prozess zur Actinden(III) Abtrennung aus einem PUREX Raffinat an.

**Tabelle 1:**

Zusammensetzung von konzentrierten synthetischen Actiniden(III)/Lanthaniden(III) Lösungen aus einem DIAMEX-Prozess, die mit Am-241 und Cm-244 getracert wurden. Die Konzentrationen der Lanthaniden(III) entsprechen dem 2.5 bzw. 10-fachen der zu erwartenden Konzentrationen. Daher KF = 2.5 und 10.

| Element | KF* = 2.5 (mg/L) | KF =10 (mg/L) |
|---|---|---|
| Am | Tracermengen | Tracermengen |
| Cm | Tracermengen | Tracermengen |
| Y | 229 | 929 |
| La | 670 | 3032 |
| Ce | 1340 | 5926 |
| Pr | 640 | 2690 |
| Nd | 2476 | 10261 |
| Sm | 469 | 1902 |
| Eu | 90 | 367 |
| Gd | 117 | 448 |
| * KF = Konzentrationsfaktor | | |

Die Ergebnisse von Extraktionsexperimenten sind in den Tabellen 2 und 3 dargestellt. Man erkennt das die Verteilungskoeffizienten von Y, Nd, Sm, Eu und Gd deutlich kleiner sind als die von La, Ce und Pr.

Ce ist das bestextrahierbarste Lanthanid. Folglich ist z. B. der Am/Eu Abtrennfaktor sehr hoch ($SF_{Am/Eu}$ > 1000), jedoch z. B. der Am/Ce Abtrennfaktor nur moderat ($SF_{Am/Ce}$ = 25-40). Zur kontinuierlichen An(III)/Ln(III) Trennung wären diese Trennungsfaktoren mehr als ausreichend. Da aber der Verteilungskoeffizient des Cm um den Faktor 10 kleiner als der des Am ist, ($SF_{Am/Cm}$ = 10) ist auch eine Trennung des Cm möglich.

Die Ergebnisse in Tabelle 3 verdeutlichen das mit diesem Extraktionssystem $(ClPh)_2PSSH$ + TEHP auch konzentriertere An/Ln Lösungen (KF = 10) behandelt werden können. Der Vergleich mit den Werten in Tabelle 2 zeigt, dass zwar die Verteilungskoeffizienten aller Elemente unter den gleichen Bedingungen etwas kleiner werden, aber die Abtrennfaktoren $SF_{Am/Eu}$, $SF_{Am/Ce}$, $SF_{Cm/Eu}$ und $SF_{Cm/Ce}$ zunehmen.
Bemerkenswert sind die hierbei erzielten hohen Am/Eu und Am/Gd Abtrennfaktoren von über 2000. Der Am/Ce-Abtrennfaktor ist allerdings um fast 2 Größenordnungen kleiner und liegt bei 36-40.
Der Am/Cm Abtrennfaktor liegt auch hier bei etwa 10. An dieser Stelle sei erwähnt, dass in der Literatur bisher kein höherer Abtrennfaktor zitiert wurde. Bisher waren nur Werte unter 2 bekannt.

**Tabelle 2:**

Extraktion von Am(III), Cm(III) und Lanthaniden(III) mit 0.4 mol/L $(ClPh)_2PSSH$ + 0.15 mol/L TEHP in 20 % Isooctan/tert. Butylbenzol aus einer synthetischen An(III)-/Ln(III)-Lösung.

<u>Organische Phase:</u>

0.4 mol/L $(ClPh)_2PSSH$ + 0.15 mol/L TEHP in 20 % Isooctan/tert. Butylbenzol.

<u>Wässrige Phase:</u>

Synthetische An(III)/Ln(III)Lösung mit der Zusammensetzung in Tabelle 1 (KF=2.5), verschiedene $HNO_3$ -Kon-

zentrationen.

| $[HNO_3]$ | 0.1 | 0.2 | 0.3 | 0.5* | 1.0* |
|---|---|---|---|---|---|
| | Verteilungskoeffizienten D | | | | |
| Am-241 | 13.65 | 3.68 | 0.83 | 0.14 | 0.013 |
| Cm-244 | 1.20 | 0.27 | 0.084 | 0.016 | 0.0025 |
| Y | 0.0071 | 0.0013 | 0.0005 | 0.0001 | 0.0000 |
| La | 0.42 | 0.093 | 0.019 | 0.0034 | 0.0003 |
| Ce | 0.58 | 0.13 | 0.033 | 0.0046 | 0.0004 |
| Pr | 0.29 | 0.064 | 0.013 | 0.0024 | 0.0002 |
| Nd | 0.079 | 0.0067 | 0.0017 | 0.0006 | 0.0001 |
| Sm | 0.017 | 0.0029 | 0.0010 | 0.0002 | 0.0000 |
| Eu-152 | 0.011 | 0.0019 | 0.0008 | - | - |
| Eu | 0.012 | 0.0021 | 0.0007 | 0.0002 | 0.0000 |
| Gd | 0.071 | 0.016 | 0.0043 | 0.0008 | 0.0001 |
| | Abtrennfaktoren SF | | | | |
| $SF_{Am/Eu}$ | 1240.9 | 1752.4 | 1012.1 | 636.4 | 183.1 |
| $SF_{Am/Ce}$ | 23.5 | 28.3 | 25.2 | 30.4 | 29.5 |
| $SF_{Am/Cm}$ | 11.4 | 13.6 | 9.9 | 8.7 | 5.2 |
| $SF_{Cm/Eu}$ | 109.1 | 142.1 | 102.4 | 72.7 | 35.2 |
| $SF_{Cm/Ce}$ | 2.1 | 2.1 | 2.5 | 3.5 | |
| * nicht zur Erfindung gehörig | | | | | |

**Tabelle 3:**

Extraktion von Am(III), Cm(III) und Lanthaniden(III) mit 0.4 mol/L $(ClPh)_2PSSH$ + 0.15 mol/L TEHP in 20 % Isooctan/tert. Butylbenzol aus einer synthetischen An(III)-/Ln(III)-Lösung.

<u>Organische Phase:</u>

0.4 mol/L $(ClPh)_2PSSH$ + 0.15 mol/L TEHP in 20 % Isooctan/tert. Butylbenzol.

<u>Wässrige Phase:</u>

Synthetische An(III)-/Ln(III)-Lösung mit der Zusammensetzung in Tabelle 1 (KF=10), verschiedene $HNO_3$-Konzentrationen

| $[HNO_3]$ | 0.1 | 0.2 | 0.3 | 0.5 * | 1.0 * |
|---|---|---|---|---|---|
| | Verteilungskoeffizienten D | | | | |
| Am-241 | 4.01 | 1.33 | 0.44 | 0.089 | 0.0080 |
| Cm-244 | 0.38 | 0.13 | 0.043 | 0.0094 | 0.0020 |
| Y | 0.0080 | 0.0002 | <0.000 | <0.000 | <0.000 |
| La | 0.082 | 0.0305 | 0.0096 | 0.0019 | <0.000 |
| Ce | 0.11 | 0.040 | 0.013 | 0.0027 | <0.000 |
| Pr | 0.053 | 0.020 | 0.0065 | 0.0012 | <0.000 |

(fortgesetzt)

| $[HNO_3]$ | 0.1 | 0.2 | 0.3 | 0.5 * | 1.0 * |
|---|---|---|---|---|---|
| | Verteilungskoeffizienten D | | | | |
| Nd | 0.011 | 0.0044 | 0.0012 | <0.000 | <0.000 |
| Sm | 0.0026 | 0.0011 | 0.0004 | 0.0001 | <0.000 |
| Eu-152 | 0.0015 | 0.0008 | 0.0004 | 0.0003 | 0.0002 |
| Eu | < | <0.000 | <0.000 | <0.000 | <0.000 |
| Gd | 0.0264 | 0.011 | 0.0032 | 0.0003 | <0.000 |
| | Abtrennfaktoren SF | | | | |
| $SF_{Am/Eu}$ | 2673.3 | 1621.9 | 1073.2 | 247.2 | 30.8 |
| $SF_{Am/Ce}$ | 36.5 | 33.3 | 33.8 | 32.9 | - |
| $SF_{Am/Cm}$ | 10.6 | 10.2 | 10.2 | 9.5 | - |
| $SF_{Cm/Eu}$ | 253.3 | 158.5 | 104.9 | 26.1 | - |
| $SF_{Cm/Ce}$ | 3.5 | 3.3 | 3.3 | 3.5 | - |
| * nicht zur Erfindung gehörig | | | | | |

In Tabelle 4 sind einige Extraktionsergebnisse zur Am(III)-/Cm(III)-Trennung aus salpetersaurer Lösung aufgeführt. Die Ergebnisse zeigen, dass die Verteilungskoeffizienten stark vom Lösungsmittel abhängig sind, jedoch der Am/Cm Abtrennfaktor $SF_{Am/Cm}$ nahezu unbeeinflusst wird. Die Verteilungskoeffizienten von Am und Cm (gemeinsam in Lösung) wurden mit Hilfe der Alphaspektroskopie bestimmt und der des Am zusätzlich mit der Gammaspektroskopie. Die Alphaspektroskopie hat den Vorteil dass beide Nuklide (hier Am-241 und Cm-244) gleichzeitig gemessen werden können.

**Tabelle 4:**

Extraktion von Am(III) und Cm(III) mit 0.5 mol/L $(ClPh)_2PSSH$ + 0.15 mol/L TEHP in Abhängigkeit vom Lösungsmittel.

Organische Phase:

0.5 mol/L $(ClPh)_2PSSH$ + 0.15 mol/L Trisethylhxylphosphat in verschiedenen Lösungsmitteln.

Wässrige Phase:

Tracermengen von Am-241 und Cm-244, verschiedene $HNO_3$ Konzentrationen.

| $[HNO_3]$ | $D_{Am(\gamma)}$ | $D_{Am(\alpha)}$ | $D_{Cm(\alpha)}$ | $SF_{Am(\alpha)/Cm(\alpha}$ |
|---|---|---|---|---|
| n-Hexan/Toluol (50/50) als Lösungsmittel | | | | |
| 0.1 | 133.697 | 155.50 | 16.2778 | 9.553 |
| 0.2 | 12.613 | 8.3936 | 1.0928 | 7.681 |
| 0.5 * | 0.5538 | 0.2654 | 0.0286 | 9.289 |
| 1.0 * | 0.0385 | 0.0175 | 0.0049 | 3.534 |
| Toluol als Lösungsmittel | | | | |
| 0.1 | 7.2381 | 10.333 | 0.9733 | 10.62 |
| 0.2 | 0.6721 | 0.7672 | 0.0850 | 9.024 |

(fortgesetzt)

| Toluol als Lösungsmittel | | | | |
|---|---|---|---|---|
| 0.5 * | 0.0296 | 0.0201 | 0.0024 | 8.319 |
| 1.0 * | 0.00255 | 0.0031 | 0.0008 | 3.683 |
| * nicht zur Erfindung gehörig | | | | |

Das erfindungsgemäße Verfahren lässt sich, wie in Figur 1 dargestellt, an bekannte Trennverfahren anschließen.

In Figur 1 ist an Hand einer Wiederaufarbeitung von abgebrannten Brennelementen zur Abtrennung von Uran und Plutonium (Neptunium), sowie anschließende Abtrennung der dreiwertigen Aktiniden Americium und Curium aus dem HAW (PUREX Raffinat gezeigt, wie ein Trennprozeß schematisch aussehen kann:

Die abgebrannten Brennelemente können einem PUREX-Verfahren zugeführt werden, bei dem U, Pu und Np abgetrennt werden. Der hochaktive, flüssige Abfall (HAW) wird einer Trennung der Actiniden(III) und Lanthaniden(III) zugeführt.

Die abgetrennten Actiniden(III) und Lanthaniden(III) werden einer selektiven Actiniden(III)-Trennung zugeführt, die beispielsweise nach dem Verfahren gemäß dem europäischen Patent 1019552 durchgeführt werden kann. Nach dem Verfahren aus dem europäischen Patent 1019552 sind in einer wässrigen Phase beispielhaft dreiwertige Ionen von Lanthaniden (Cer), (Ce), Praseodym (Pr), Neodym (Nd), Promethium (Pr), Samarium (Sm), Europium (Eu), Gadolinium (Gd), Terbium (Tb), Dysprosium (Dy), Holmium (Ho), Erbium (Er), Thulium (Tm), Ytterbium (Yb), Luthenium (Lu), sowie Lanthan (La) und Yttrium (Y) oder mindestens eine Komponente aus dieser Gruppe und Ionen von dreiwertigen Actiniden, wie Americium (Am) und/oder Curium (Cm) enthalten. Die wässrige Phase weist einen niedrigen pH-Wert auf, der einer $H^+$-Konzentration einer starken Säure von 0,01 bis 2 mol/l entspricht. Als Säuren können HCl, $H_2SO_4$ und insbesondere $HNO_3$ eingesetzt werden, da $HNO_3$ leicht lösliche Salze bildet. Die Extraktion erfolgt mittels eines organischen Lösungsmittels, welches als Extraktionsmittel bis(aryl)dithiophosphinsäure der allgemeinen Formel (4) $R_2PS(SH)$ enthält.

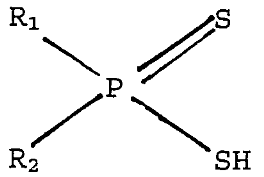

(4)

mit $R_1$ = phenyl- oder naphthyl,
$R_2$ = phenyl- oder naphthyl,
sowie mit methyl-, ethyl-, propyl-, isopropyl-, cyano-, nitro-, halogenyl- ($Cl^-$, $F^-$, $Br^-$,$J^-$) substituierten Resten von $R_1$ und $R_2$ wobei $R_1$ und $R_2$ mit mindestens einer Komponente aus der Gruppe von methyl-, ethyl-, propyl-, isopropyl-, cyano-, nitro-, halogenyl- ($Cl^-$, $F^-$, $Br^-$, $J^-$) substituiert sein können. Diese Gruppen sind beispielhaft für die Acidität des Extraktionsmittels bis(aryl)dithiophosphinsäure steigernde Substituenten, die zu besonders gutem Extraktionsverhalten führen. Entscheidend ist die Steigerung der Acidität des Extraktionsmittels, auf die genaue Stellung der Substituenten kommt es weniger an.

Beispielhaft enthält die organische Phase mindestens einen Synergisten aus der Gruppe bestehend aus Trioctylphosphat (Formel (6)), Tris-(2-ethylhexyl)-phosphat (Formel (7)) und Tris-(2-propylpentyl)-phosphat (Formel (8)).

$$(CH_3CH_2CH_2CH_2CH_2CH_2CH_2CH_2 - O -)_3P = O \qquad (6)$$

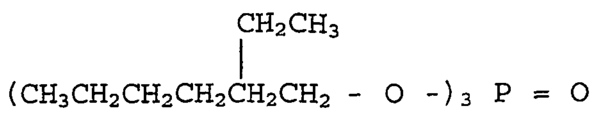

(7)

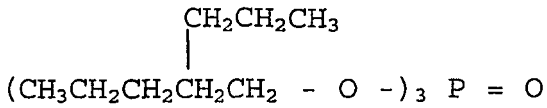

(8)

Es können aber auch die Synergisten der allgemeinen Formel (5) eingesetzt werden.

Mit der Zugabe der Synergisten wird eine erhebliche Zunahme des Trennfaktors SF bewirkt. Die Selektivität bei der Abtrennung der Actinide von den Lanthaniden wird erheblich gesteigert.

Das organische Lösungsmittel ist vorteilhaft eine aromatische Komponente, wie Benzol enthaltendes Lösungsmittel oder ein rein aromatisches Lösungsmittel.

In einer besonders vorteilhaften Ausgestaltung der Erfindung wird als Lösungsmittel mindestens eine Komponente aus der Gruppe von Toluol, Xylol, tert.-Butylbenzol, sowie bis- oder tris- (tert.-Butyl)-benzol, Isopropylbenzol, bis- oder tris- (Isopropyl)-benzol eingesetzt. Der Einsatz dieser Lösungsmittel führt zu zwei zusätzlichen positiven Effekten: Zum einen wird die Selektivität der $An^{3+}$ Extraktion weiterhin gesteigert, zum anderen wird der Verteilungskoeffizient $D_{An(III)}$ zusätzlich verbessert.

Die Reihenfolge der Wirksamkeit für den Trennfaktor SF und den Verteilungskoeffizienten verhalten sich wie folgt:

Benzol < Toluol < Xylol < tert.-Butylbenzol < Bis-(isopropyl)-benzol, Tri-isopropylbenzol, Bis-(tert.-Butyl)-benzol, Tris-(tert.-Butyl)-benzol.

Im Anschluss erfolgt die Trennung von Americium III und Curium III mit dem erfindungsgemäßen Verfahren.

Eine Prozessführung gemäß dem erfindungsgemäßen Verfahren ist beispielhaft in Figur 2 angegeben.
Figur 2 zeigt einen Der LUCA-Prozess zur Actiniden(III)/Lanthaniden(III) Abtrennung und anschließender Americium/ Curium Trennung.

In dieser Darstellung werden die Actiniden(III) aus einer, eine Americium(III) und Curium(III) sowie Lanthaniden (III) enthaltende, wässrigen Lösung mit 0,1 Mol/L $HNO_3$ mit einem Extraktionsmittel, bestehend aus 0,4 Mol/L $(ClPh)_2PSSH$ und 0,15 Mol/L Trisethylhexylphosphat, in einem organischen Lösungsmittel extrahiert. Mit einer 0,3 Mol/L $HNO_3$-Lösung wird anschließend Curium III reextrahiert. Danach erfolgt die Rückextraktion von Americium(III) mit 1,0 Mol/L $HNO_3$.

Das Flussschema sieht wie folgt aus:

1. Selektive Extraktion von Am und Cm. Die Lanthaniden Ln(III) hier Y, La, Ce, Pr, Nd, Sm Eu und Gd verbleiben im Raffinat (in Abbildung = Ln(III)).
2. Selektives Strippen von Cm(III)
3. Strippen von Am(III).

## Patentansprüche

**1.** Verfahren zur Trennung von dreiwertigem Americium von dreiwertigem Curium aus einer mindestens diese Kationen enthaltenden wässrigen Lösung,
**dadurch gekennzeichnet,**
**dass** die wässrige Lösung bei einer Säurekonzentration von 0,01 mol/l - 0,3 mol/l mit einem organischen Lösungsmittel enthaltend eine Bis(aryl)dithiophosphinsäure der allgemeinen Formel (4)

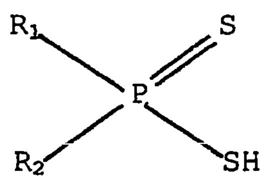

(4)

mit $R_1$ = phenyl- oder naphthyl,
$R_2$ = phenyl- oder naphthyl,
sowie mit methyl-, ethyl-, propyl-, isopropyl-, cyano-, nitro-, halogenyl- ($Cl^-$, $F^-$, $Br^-$, $J^-$) substituierten Resten von $R_1$ und $R_2$ wobei $R_1$ und $R_2$ mit mindestens einer Komponente aus der Gruppe von methyl-, ethyl-, propyl-, isopropyl-,

cyano-, nitro-, halogenyl- ($Cl^-$, $F^-$, $Br^-$, $J^-$) substituiert sein können sowie einen Synergisten der allgemeinen Formel (5)

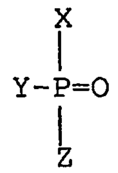

(5)

mit X und/oder Y und/oder Z = RO (=Alkoxy), wobei R verzweigt und/oder unverzweigt sein kann in Kontakt gebracht wird.

**2.** Verfahren nach Anspruch 1,
**dadurch gekennzeichnet,**
**dass** das organische Lösungsmittel ein aromatisches Lösungsmittel, ein aliphatisches Lösungsmittel oder ein Gemisch davon ist.

**3.** Verfahren nach Anspruch 2;
**dadurch gekennzeichnet,**
**dass** das aromatische Lösungsmittel mindestens eine Komponente aus der Gruppe bestehend aus Benzol, Toluol, Tert. Butylbenzol, Xylol, bis- oder tris-(Ter.-Butyl)-benzol, Isopropylbenzol, bis- oder tris(Isopropyl)-benzol ist.

**4.** Verfahren nach Anspruch 2,
**dadurch gekennzeichnet,**
**dass** das aliphatische Lösungsmittel mindestens eine Komponente aus der Gruppe der verzweigten oder unverzweigten aliphatischen Lösungsmittel einer Kettenlänge von C5 bis C14 ist.

**5.** Verfahren nach Anspruch 2 oder 4,
**dadurch gekennzeichnet,**
**dass** das aliphatische Lösungsmittel mindestens eine Komponente aus der Gruppe bestehend aus n-Hexan, c-Hexan, Heptan, Octan, Nonan, Decan, Undecan, Dodecan, Kerosin oder TPH ist.

**6.** Verfahren nach einem der Ansprüche 2 bis 5,
**dadurch gekennzeichnet,**
**dass** das aromatische Lösungsmittel als Hauptkomponente eingesetzt wird.

**7.** Verfahren nach einem der Ansprüche 1 bis 6,
**dadurch gekennzeichnet,**
**dass** es einem Lanthaniden-Actiniden-Trennverfahren nachgeschaltet ist.

**8.** Verfahren nach Anspruch 7,
**dadurch gekennzeichnet,**
**dass** das Lanthaniden-Actiniden-Trennverfahren ein Talspeak-, TRUEX-, TRPO- oder Diamex-Prozess ist.

**9.** Verfahren nach Anspruch 7,
**dadurch gekennzeichnet,**
**dass** das Lanthaniden-Actiniden-Trennverfahren ein Prozess ist, bei dem die Actiniden aus einer wässrigen Lösung mittels eines Lösungsmittels, enthaltend eine Bis(aryl)dithiophosphinsäure der allgemeinen Formel (4)

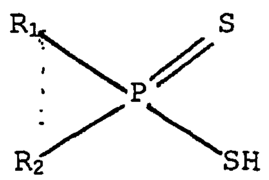

(4)

mit $R_1$ = phenyl- oder naphthyl,
$R_2$ = phenyl- oder naphthyl,
sowie mit methyl-, ethyl-, propyl-, isopropyl-, cyano-, nitro-, halogenyl- ($Cl^-$, $F^-$, $Br^-$,$J^-$) substituierten Resten von $R_1$ und $R_2$ wobei $R_1$ und $R_2$ mit mindestens einer Komponente aus der Gruppe von methyl-, ethyl-, propyl-, isopropyl-, cyano-, nitro-, halogenyl- ($Cl^-$, $F^-$, $Br^-$, $J^-$) substituiert sein können sowie einen Synergisten der allgemeinen Formel (5)

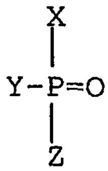

(5)

mit X und/oder Y und/oder Z = RO (=Alkoxy)
und/oder R(=Alkyl), wobei R verzweigt und/oder unverzweigt sein kann, extrahiert werden.

## Claims

1. Method for separating trivalent americium from trivalent curium, coming from an aqueous solution containing at least these cations, **characterised in that**, at an acid concentration of 0.01 mol/l - 0.3 mol/l, the aqueous solution is brought into contact with an organic solvent containing a bis(aryl)dithiophosphinic acid having the general formula (4)

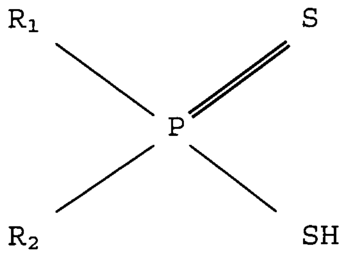

(4)

where $R_1$ = phenyl or naphthyl
$R_2$ = phenyl or naphthyl,
and radicals of $R_1$ and $R_2$ substituted with methyl-, ethyl-, propyl-, isopropyl-, cyano-, nitro-, halogenyl-($Cl^-$, $F^-$, $Br^-$, $J^-$), in which case $R_1$ and $R_2$ may be substituted with at least one member of the group comprising methyl-, ethyl-, propyl-, isopropyl-, cyano-, nitro-, halogenyl-($Cl^-$, $F^-$, $Br^-$, $J^-$), and containing a synergist having the general formula (5)

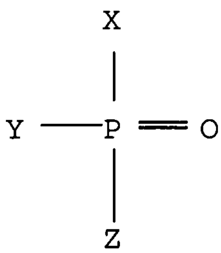

(5)

where X and/or Y and/or Z = RO (= alkoxy), in which case R may be branched or unbranched.

2. Method according to claim 1, **characterised in that** the organic solvent is an aromatic solvent, an aliphatic solvent or a mixture thereof.

3. Method according to claim 2, **characterised in that** the aromatic solvent is at least one member of the group

comprising benzene, toluene, tertiary butyl benzene, xylene, bis or tris(tertiary butyl)benzene, isopropyl benzene, bis or tris(isopropyl)benzene.

4. Method according to claim 2, **characterised in that** the aliphatic solvent is at least one member of the group comprising the branched or unbranched aliphatic solvents having a chain length from C5 to C14.

5. Method according to claim 2 or 4, **characterised in that** the aliphatic solvent is at least one member of the group comprising n-hexane, c-hexane, heptane, octane, nonane, decane, undecane, dodecane, kerosene or TPH.

6. Method according to one of claims 2 to 5, **characterised in that** the aliphatic solvent is used as a main component.

7. Method according to one of claims 1 to 6, **characterised in that** it follows a lanthanide/actinide separating process.

8. Method according to claim 7, **characterised in that** the lanthanide/actinide separating process is a Talspeak, TRUEX, TRPO or Diamex process.

9. Method according to claim 7, **characterised in that** the lanthanide/actinide separating process is a process in which the actinides are extracted from an aqueous solution by means of a solvent containing a bis(aryl)dithiophosphinic acid having the general formula (4)

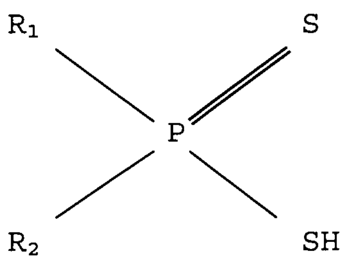

(4)

where $R_1$ = phenyl or naphthyl
$R_2$ = phenyl or naphthyl,
and radicals of $R_1$ and $R_2$ substituted with methyl-, ethyl-, propyl-, isopropyl-, cyano-, nitro-, halogenyl-($Cl^-$, $F^-$, $Br^-$, $J^-$), in which case $R_1$ and $R_2$ may be substituted with at least one member of the group comprising methyl-, ethyl-, propyl-, isopropyl-, cyano-, nitro-, halogenyl-($Cl^-$, $F^-$, $Br^-$, $J^-$), and containing a synergist having the general formula (5)

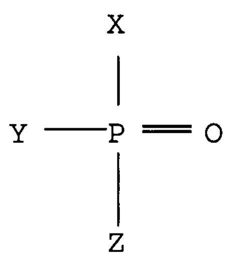

(5)

where X and/or Y and/or Z = RO (= alkoxy) and/or R (= alkyl), in which case R may be branched or unbranched.

## Revendications

1. Procédé de séparation de l'américium trivalent du curium trivalent à partir d'une solution aqueuse contenant au moins ces cations,
**caractérisé en ce que** la solution aqueuse est mise en contact, à une concentration acide de 0,01 mole/l à 0,3 mole/l, avec un solvant organique contenant un acide bis(aryl)dithiophosphinique de formule générale (4)

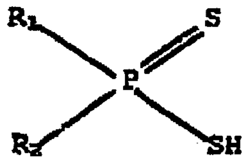

(4)

avec $R_1$ = phényle ou naphtyle,
$R_2$ = phényle ou naphtyle,
ainsi qu'avec des radicaux de $R_1$ et $R_2$ substitués avec un groupement méthyle, éthyle, propyle, isopropyle, cyano, nitro, halogényle ($Cl^-$, $F^-$, $Br^-$, $J^-$) , $R_1$ et $R_2$ pouvant être substitués avec au moins un composant choisi parmi le groupe comprenant les groupements méthyle, éthyle, propyle, isopropyle, cyano, nitro, halogényle ($Cl^-$, $F^-$, $Br^-$, $J^-$), ainsi qu'avec un synergiste de la formule générale (5)

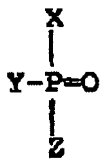

(5)

avec X et/ou Y et/ou Z = RO (= alcoxy), R pouvant être ramifié et/ou non ramifié.

2. Procédé selon la revendication 1,
**caractérisé en ce**
**que** le solvant organique est un solvant aromatique, un solvant aliphatique ou un mélange des deux.

3. Procédé selon la revendication 2,
**caractérisé en ce**
**que** le solvant aromatique est au moins un composé choisi parmi le groupe se composant du benzène, du toluène, du tert-butylbenzène, du xylène, du bis- ou tris-(ter-butyl)benzène, de l'isopropylbenzène, du bisou tris-(isopropyl) benzène.

4. Procédé selon la revendication 2,
**caractérisé en ce**
**que** le solvant aliphatique est au moins un composé choisi parmi le groupe comprenant les solvants aliphatiques ramifiés ou non ramifiés d'une longueur de chaîne en $C_5$ à $C_{14}$.

5. Procédé selon la revendication 2 ou la revendication 4,
**caractérisé en ce**
**que** le solvant aliphatique est au moins un composé choisi parmi le groupe se composant du n-hexane, du c-hexane, de l'heptane, de l'octane, du nonane, du décane, de l'undécane, du dodécane, du kérosène ou du TPH.

6. Procédé selon l'une quelconque des revendications 2 à 5,
**caractérisé en ce**
**que** l'on utilise comme composant principal le solvant aromatique.

7. Procédé selon l'une quelconque des revendications 1 à 6,
**caractérisé en ce**
**qu'**il est mis en oeuvre après un procédé de séparation lanthanides/actinides.

8. Procédé selon la revendication 7,
**caractérisé en ce**
**que** le procédé de séparation lanthanides/actinides est un procédé de type Talspeak, TRUEX, TRPO ou Diamex.

**9.** Procédé selon la revendication 7,
**caractérisé en ce**
**que** le procédé de séparation lanthanides/actinides est un procédé dans lequel les actinides sont extraits à partir d'une solution aqueuse au moyen d'un solvant contenant un acide bis(aryl)dithiophosphinique de la formule générale (4)

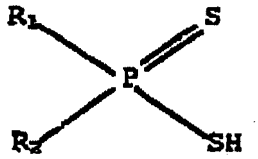

(4)

avec $R_1$ = phényle ou naphtyle,
$R_2$ = phenyl ou naphtyle,
ainsi qu'avec des radicaux de $R_1$ et $R_2$ substitués avec un groupement méthyle, éthyle, propyle, isopropyle, cyano, nitro, halogényle ($Cl^-$, $F^-$, $Br^-$, $J^-$), $R_1$ et $R_2$ pouvant être substitués avec au moins un composant choisi parmi le groupe comprenant les groupements méthyle, éthyle, propyle, isopropyle, cyano, nitro, halogényle ($Cl^-$, $F^-$, $Br^-$, $J^-$), ainsi qu'avec un synergiste de la formule générale (5)

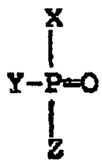

(5)

avec X et/ou Y et/ou Z = RO (= alcoxy)
et/ou R (= alkyle), R pouvant être ramifié et/ou non ramifié.

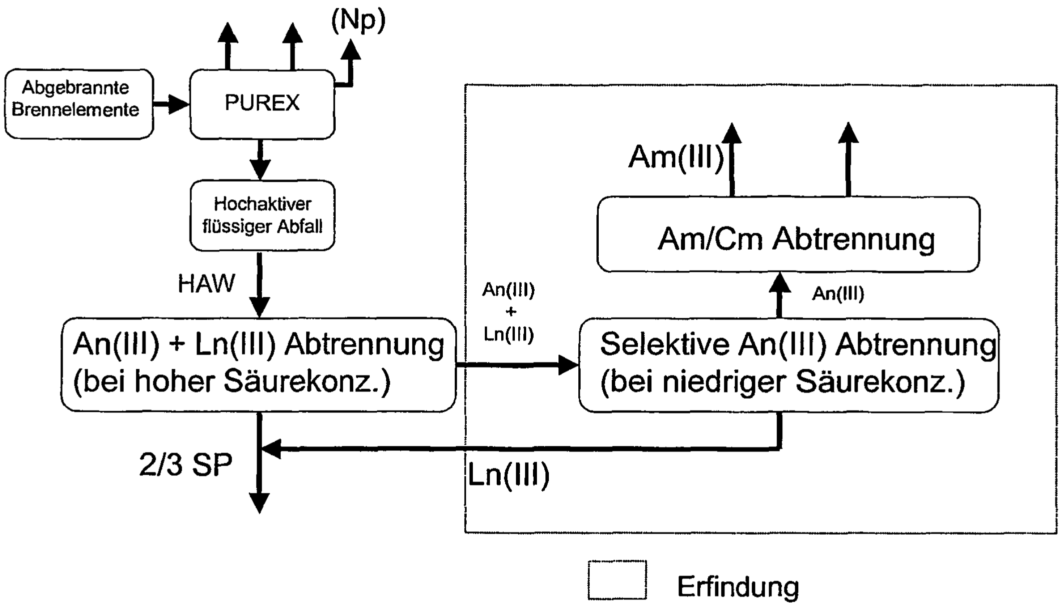


Figur 1

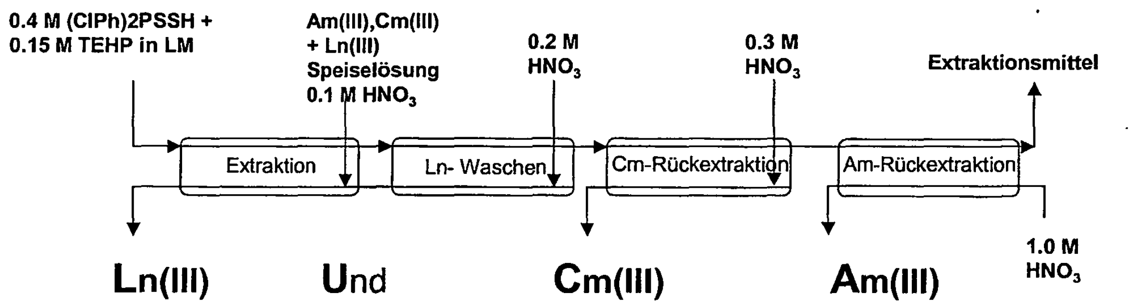


LUCA-Prozess

Figur 2